(19) Europäisches Patentamt
European Patent Office
Office européen des brevets

(11) **EP 1 484 493 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(51) Int Cl.:
*F02D 41/40* *(2006.01)*

(21) Anmeldenummer: **04012839.9**

(22) Anmeldetag: **29.05.2004**

(54) **Verfahren zum Betreiben einer Brennkraftmaschine**

Method for operating an internal combustion engine

Procédé de fonctionnement d'un moteur à combustion interne

(84) Benannte Vertragsstaaten:
**DE FR GB IT**

(30) Priorität: **07.06.2003 DE 10325988**

(43) Veröffentlichungstag der Anmeldung:
**08.12.2004 Patentblatt 2004/50**

(73) Patentinhaber: **DaimlerChrysler AG**
**70567 Stuttgart (DE)**

(72) Erfinder: **Gieray, Claus**
**70565 Stuttgart (DE)**

(56) Entgegenhaltungen:
**EP-A2- 1 041 265**     **US-A- 5 979 397**
**US-A1- 2002 195 082**

EP 1 484 493 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Betreiben einer Brennkraftmaschine mit Einspritzanlage, wobei eine eingespritzte Kraftstoffmenge mittels mehrerer, während eines Zyklus der Brennkraftmaschine erfolgender Einspritzungen eingebracht wird, wobei eine mittels einer einzelnen Einspritzung eingebrachte Kraftstoffmenge bis zu einer vorgegebenen Mindestmenge veränderbar ist und wobei einzelne oder alle Einspritzungen abgeschaltet werden können.

Aus der deutschen Offenlegungsschrift DE 101 32 838 A1 ist ein Verfahren zum Betreiben einer Brennkraftmaschine mit Einspritzanlage beschrieben, bei dem eine Kraftstoffmenge mittels mehrerer Einspritzungen eingebracht wird. Eine für einen definierten Betriebszustand der Brennkraftmaschine vorgesehene Kraftstoffmenge wird bestimmt, und die bestimmte Kraftstoffmenge wird dann auf die einzelnen, vorzunehmenden Einspritzungen aufgeteilt. Dabei findet eine Mengenbilanzierung statt, indem die bestimmte, einzuspritzende Kraftstoffmenge mit der Summe der für die einzelnen Einspritzungen vorgegebenen Mindestmengen verglichen wird. Liegt die einzuspritzende Kraftstoffmenge unterhalb der Summe der Mindestmengen, werden einzelne Einspritzungen abgeschaltet. Beispielsweise wird auf eine Voreinspritzung verzichtet, wenn die einzuspritzende Kraftstoffmenge kleiner als die Summe der Mindestmengen von Vor- Haupt- und Nacheinspritzung ist. Liegt die einzuspritzende Kraftstoffmenge unterhalb der Summe der vorgegebenen Mindestmengen für die Vor- Haupt- und Nacheinspritzung aber oberhalb der Summe der für die Haupt- und Nacheinspritzung vorgegebenen Mindestmengen wird die Haupteinspritzung auf die vorgegebene Mindestmenge eingestellt und die Nacheinspritzung nach Möglichkeit auf die Wunschmenge eingestellt. Die Brennstoffaufteilungsstrategie zwischen den einzelnen Einspritzungen ist demnach so gewählt, dass es dem Steuerprogramm gestattet wird, eine Regelungseinspritzung einzustellen. Die Regelungseinspritzung wird als diejenige Einspritzung bezeichnet, die den gesamten restlichen Brennstoff aufnehmen wird, nachdem die übrigen Einspritzungen auf ihre Mindestmengen eingestellt sind. Wenn beispielsweise die erwünschte Haupteinspritzung und die erwünschte Nacheinspritzung auf die Mindestmengen eingestellt sind, würde die Voreinspritzung die Regelungseinspritzung sein, die den gesamten Brennstoff aufnimmt, der zwischen der für den Betriebszustand des Motors bestimmten Wunschmenge und der Summe der für die Haupt- und Nacheinspritzung eingestellten Mindestmengen verbleibt.

Speziell bei Dieselmotoren mit Direkteinspritzung besteht das Problem, dass das Verbrennungsgeräusch im Wesentlichen durch den Druckverlauf während der Kraftstoffumsetzung im Brennraum charakterisiert ist. Vor allem hohe Druckgradienten führen zu dem typischen, subjektiv unangenehmen Dieselnageln. Zur Vermeidung hoher Druckgradienten wird an Dieselmotoren mit Common-Rail-Einspritztechnologie aus diesem Grund eine Mehrfacheinspritzung angewendet. Diese Mehrfacheinspritzung besteht in der Regel aus mehreren Voreinspritzungen und einer Haupteinspritzung. Mit bisher eingesetzten Injektoren ist es nicht möglich, unbegrenzt kleine Kraftstoffmengen einzuspritzen, so dass bei einer kontinuierlichen Abnahme des Gesamtmengenbedarfs Voreinspritzungen nach und nach abgeschaltet werden müssen. Dabei kommt es unmittelbar zu einer Erhöhung der Geräuschemission. Das An- und Abschalten einer Einspritzung im Leerlauf das durch einen geringen Gesamtmengenbedarf verursacht ist, kann darüber hinaus zum Schütteln des Motors führen.

Mit der Erfindung soll ein möglichst sanfter Brennverlauf bei einer Brennkraftmaschine mit Einspritzanlage erreicht werden.

Erfindungsgemäß ist hierzu ein Verfahren zum Betreiben einer Brennkraftmaschine mit Einspritzanlage, insbesondere eines Dieselmotors mit Direkteinspritzung, vorgesehen, wobei eine eingespritzte Kraftstoffmenge mittels mehrerer, während eines Zyklus der Brennkraftmaschine erfolgender Einspritzungen eingebracht wird, wobei eine mittels einer einzelnen Einspritzung eingebrachte Kraftstoffmenge bis zu einer vorgegebenen Mindestmenge veränderbar ist und wobei einzelne oder alle Einspritzungen abgeschaltet werden können, bei dem vor dem Abschalten einer Einspritzung alle Einspritzungen ungeachtet einer für die einzelnen Einspritzungen eventuell vorgegebenen Wunschmenge gemäß einem vorgegebenen Reduzierungsverlauf auf die jeweils vorgegebene Mindestmenge zurückgefahren werden.

Durch diese Maßnahmen kann die Aufteilung der gesamten einzuspritzenden Kraftstoffmenge auf die einzelnen Einspritzungen so koordiniert werden, dass möglichst lange alle Einspritzungen freigegeben werden können. Darüber hinaus wird ein gleichmäßiger Brennverlauf dadurch sichergestellt, dass die einzelnen Einspritzungen allmählich und gemäß einem vorgegebenen Reduzierungsverlauf auf die Minimalmenge zurückgefahren werden. Im Unterschied zum Stand der Technik kann es dadurch nicht auftreten, dass eine erste Voreinspritzung noch auf der vorgesehenen Wunschmenge verharrt, wohingegen eine zweite Voreinspritzung und eine Haupteinspritzung bereits auf der Mindestmenge liegen. Wesentlich für die Erfindung ist, dass die einzelnen Einspritzungen unabhängig von den vorher bestimmten Wunschmengen für die einzelnen Einspritzungen gemäß einem vorgegebenen Reduzierungsverlauf wenn nötig bis zum möglichen Minimalniveau reduziert werden. Vor dem Abschalten einer einzelnen Einspritzung liegen damit in der Regel alle Einspritzungen unterhalb der für sie vorgesehenen Wunschmenge, so dass der Zustand mit einer abgeschalteten Einspritzung allmählich erreicht werden kann. Dadurch wird ein gleichförmiger Brennverlauf sichergestellt.

In Weiterbildung der Erfindung sind die für die einzelnen Einspritzungen vorgegebene Mindestmengen betriebspunktabhängig.

In Weiterbildung der Erfindung werden alle Einspritzungen gleichmäßig auf die jeweils vorgegebene Mindestmenge zurückgefahren.

Durch diese Maßnahme können alle Einspritzungen gleichzeitig und ohne Priorisierung auf die jeweils vorgegebene Mindestmenge zurückgefahren werden. Ein gleichmäßiger Reduzierungsverlauf für alle Einspritzungen verursacht nur einen geringen Programmier- und Rechenaufwand in einer Steuereinheit. Vorteilhaft ist, dass das Verhältnis der Einspritzungen untereinander aufgrund der gleichmäßigen Reduzierung erhalten bleibt, so dass ein gleichmäßiger Brennverlauf begünstigt wird. Erst nachdem eine der Einspritzungen eine vorgegebene Mindestmenge erreicht hat, ändert sich das Kraftstoffmengenverhältnis der einzelnen Einspritzungen zueinander.

In Weiterbildung der Erfindung sind eine oder mehrere Einspritzungen priorisiert, so dass die priorisierten Einspritzungen erst dann auf ihre jeweils vorgegebenen Mindestmengen zurückgefahren werden, nachdem die übrigen, nicht priorisierten Einspritzungen bereits die jeweiligen Mindestmenge aufweisen.

Durch diese Maßnahmen können die Kraftstoffmengen bei für einen gleichmäßigen Brennverlauf besonders wichtigen Einspritzungen möglichst lange auf hohen Werten gehalten werden. Beispielsweise ist eine Haupteinspritzung priorisiert und wird erst nach dem Reduzieren von zwei Voreinspritzungen auf die vorgegebene Mindestmenge zurückgefahren.

In Weiterbildung der Erfindung ist ein linearer Reduzierungsverlauf vorgesehen.

Ein linearer Reduzierungsverlauf ermöglicht es, den Programmier- und Rechenaufwand in einer Steuereinheit gering zu halten. Dies ist auch deshalb von Bedeutung, da die jeweils vorgegebenen Mindestmengen betriebspunktabhängig sein können. Ein vorgegebener, linearer Reduzierungsverlauf lässt sich in einfacher Weise an variierende Mindestmengen anpassen. Alternativ kann aber auch ein quadratischer oder kubischer Reduzierungsverlauf vorgegeben sein, gegebenenfalls nur für einzelne Einspritzungen.

Das der Erfindung zugrundeliegende Problem wird auch durch eine Steuereinheit für eine Brennkraftmaschine mit Einspritzanlage gelöst, bei der Mittel vorgesehen sind, um die Brennkraftmaschine gemäß dem erfindungsgemäßen Verfahren zu betreiben. Weiterhin wird das der Erfindung zugrundeliegende Problem durch eine Brennkraftmaschine mit Einspritzanlage und einer Steuereinheit gelöst, bei der die Steuereinheit Mittel aufweist, um die Brennkraftmaschine gemäß dem erfindungsgemäßen Verfahren zu betreiben.

Moderne Brennkraftmaschinen mit Einspritzanlage werden mittels elektronischer Steuereinheiten betrieben, wobei die Steuereinheit Einspritzmengen, Einspritzzeitpunkte und weitere Einstellparameter der Brennkraftmaschine je nach Betriebspunkt in Kennfeldern nachschlägt oder berechnet. Das erfindungsgemäße Verfahren kann demnach durch eine Hardwareänderung in der Steuereinheit oder auch durch eine Umprogrammierung der Steuereinheit realisiert werden. Die Erfindung kann sich somit auch in einem Computerprogramm manifestieren, das in eine elektronische Steuereinheit einer Brennkraftmaschine, insbesondere eines Dieselmotors mit Direkteinspritzung, geladen werden kann, und das dann, wenn es in der Steuereinheit abläuft, das erfindungsgemäße Verfahren für den Betrieb einer Brennkraftmaschine verwirklicht.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. In den Zeichnungen zeigt:

Fig. 1 ein Diagramm mit der zeitlichen Abfolge von Voreinspritzungen und Haupteinspritzung gemäß dem erfindungsgemäßen Verfahren,

Fig. 2 ein Diagramm der gesamten, einzuspritzenden Wunschmenge an Kraftstoff über der Fahrpedalstellung,

Fig. 3 ein Diagramm mit dem Mengenverlauf für die mit den einzelnen Einspritzungen einzuspritzenden Kraftstoffmengen gemäß einer ersten Ausführungsform der Erfindung,

Fig. 4 ein Diagramm mit einem Mengenverlauf für die mit den einzelnen Einspritzungen einzuspritzenden Kraftstoffmengen gemäß einer zweiten Ausführungsform der Erfindung,

Fig. 5 eine vergrößerte, ausschnittsweise Darstellung des Diagramms der Figur 3,

Fig. 6 eine vergrößerte, ausschnittsweise Darstellung des Diagramms der Figur 4,

Fig. 7 einen weiteren, vergrößerten Ausschnitt des Diagramms der Figur 3,

Fig. 8 einen weiteren, vergrößerten Ausschnitt des Diagramms der Figur 4,

Fig. 9 ein Funktionsschaubild eines Teils einer Steuereinheit zur Realisierung eines Reduzierungsverlaufs für die ersten Voreinspritzungen gemäß dem erfindungsgemäßen Verfahren,

Fig. 10     ein Funktionsschaubild zur Realisierung eines Reduzierungsverlaufs für die zweiten Voreinspritzungen,

Fig. 11     ein Funktionsschaubild für einen Reduzierungsverlauf bei einer Voreinspritzung und einer Haupteinspritzung mit Priorisierung und

Fig. 12     ein Funktionsschaubild zur Reduzierung von zwei Voreinspritzungen und einer Haupteinspritzung mit vorgegebener Priorisierung.

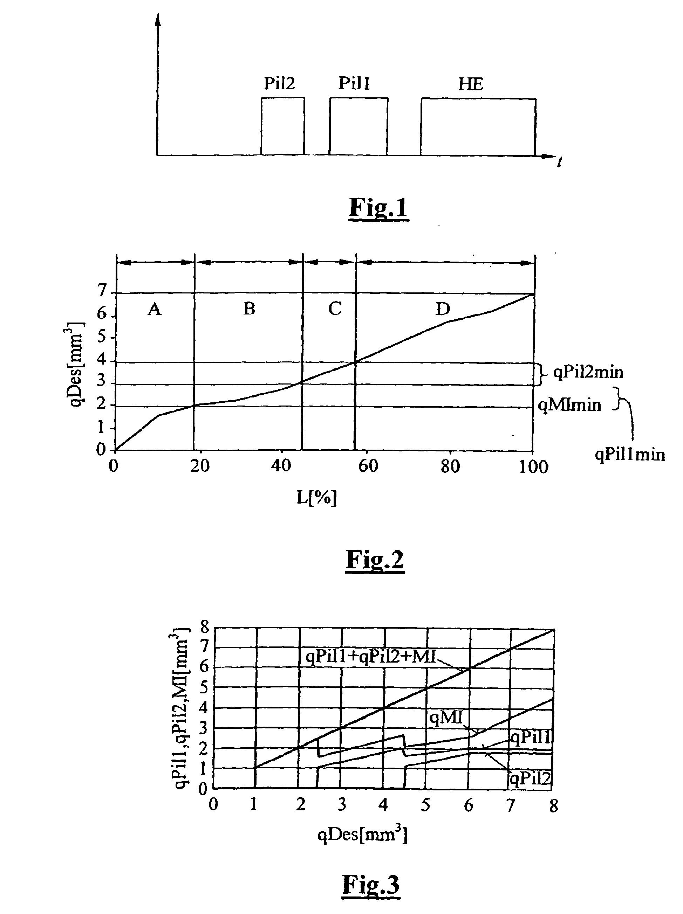

Die Darstellung der Figur 1 zeigt das Aufeinanderfolgen von zwei Voreinspritzungen Pil1 und Pil2 sowie einer Haupteinspritzung HE über der Zeit t. Wie der Figur 1 zu entnehmen ist sind die Voreinspritzungen dabei so nummeriert, dass zeitlich gesehen zunächst die zweite Voreinspritzung Pil2 erfolgt, dann die erste Voreinspritzung Pill und erst dann die Haupteinspritzung HE. Weiterhin ist Figur 1 zu entnehmen, dass die zweite Voreinspritzung Pil2 eine geringere Einspritzdauer aufweist als die erste Voreinspritzung Pill. Die Einspritzdauer der Haupteinspritzung HE ist demgegenüber größer als die Einspritzdauern der Voreinspritzungen Pil1 und Pil 2 zusammen. Mit der Haupteinspritzung HE wird die größte Kraftstoffmenge eingespritzt, mit der ersten Voreinspritzung Pill eine kleinere Kraftstoffmenge und mit der zweiten voreinspritzung Pil2 eine noch geringere Kraftstoffmenge.

In der Darstellung der Figur 2 ist ein Gesamtmengenbedarf qDes oder eine Gesamt-Wunschmenge für die einzuspritzende Kraftstoffmenge über der Fahrpedalstellung L dargestellt. Die Gesamt-Wunschmenge steigt konsequenter Weise mit zunehmender Last an. In dem Diagramm der Figur 2 sind darüber hinaus Mindestmengen für die einzelnen Einspritzungen als horizontal verlaufende Linien eingetragen. Speziell liegt eine Mindestmenge $qMI_{min}$ für die Haupteinspritzung HE etwas unterhalb von 2 mm$^3$. Eine Mindestmenge $qPiL1_{min}$ für die erste Voreinspritzung Pill liegt bei etwa 1 mm$^3$ und in gleicher Weise liegt eine Mindestmenge $qPiL2_{min}$, für die zweite Voreinspritzung Pil2 bei etwa 1mm$^3$. In der Darstellung der Fig. 2 ist die Mindestmenge $qPil1_{min}$ für die erste Voreinspritzung ausgehend von der Mindestmenge $qMI_{min}$ für die Haupteinspritzung als horizontale Linie in dem Diagramm der Figur 2 aufgetragen und die Mindestmenge $qPil2_{min}$ für die zweite Voreinspritzung ist ausgehend von der Mindestmenge $qPil1_{min}$ als horizontale Linie aufgetragen. Dadurch ist dem Diagramm der Figur 2 zu entnehmen, ab welcher Fahrpedalstellung L die vorgegebene Wunschmenge eine, zwei oder drei Einspritzungen ermöglicht.

So ist im Bereich A keine Einspritzung möglich, da die Wunschmenge qDes kleiner ist als die Mindestmenge $qMI_{min}$ für die Haupteinspritzung. Im Bereich B ist eine Einspritzung, nämlich die Haupteinspritzung, möglich, da die Wunschmenge qDes größer ist als die Mindestmenge $qMI_{min}$ der Haupteinspritzung aber kleiner als die Summe der Mindestmenge $qMI_{min}$ für die Haupteinspritzung und der Mindestmenge $qPII1_{min}$ für die erste Voreinspritzung. Im Bereich C sind dann zwei Einspritzungen möglich, da die Wunschmenge qDes größer ist als die Summe der Mindestmenge $qMI_{min}$ für die Haupteinspritzung und der Mindestmenge $qPil1_{min}$ für die erste Voreinspritzung, aber noch kleiner ist als die Summe aller drei Mindestmengen. Im Bereich D sind schließlich drei Einspritzungen möglich, da die vorgegebene Gesamt-Wunschmenge qDes größer oder gleich als die Summe aller drei Mindestmengen ist.

Das Diagramm der Figur 2 zeigt lediglich einen beispielhaften Verlauf der Gesamt-Wunschmenge qDes sowie der einzelnen Mindestmengen, die der Einfachheit halber als über der Fahrpedalstellung L konstant dargestellt sind. Anhand der Figur 2 wird deutlich, dass bei einer kontinuierlichen Abnahme des Gesamtmengenbedarfs oder der Gesamt-Wunschmenge qDes Voreinspritzungen nach und nach abgeschaltet werden müssen, da es mit den bisher eingesetzten Injektoren nicht möglich ist, unbegrenzt kleine Kraftstoffmengen einzuspritzen. Bei der Abschaltung einer oder mehrerer Voreinspritzungen kommt es aber unmittelbar zu einer Erhöhung der Geräuschemission. Außerdem kann ein zu frühes An- und Abschalten einer Einspritzung im Leerlauf, verursacht durch geringen Gesamtmengenbedarf, zum Schütteln des Motors führen. Im Unterschied zur Darstellung der Figur 2 können, wie bereits angedeutet wurde, die Mindestmengen eines Injektors beziehungsweise für eine Einspritzung einerseits von der Höhe des Kraftstoffdruckes, speziell des Raildruckes, und andererseits von den vorhergehenden Einspritzungen abhängen. Somit können die Mindestmengen für die einzelnen Einspritzungen vom Motorbetriebspunkt abhängig sein und variieren.

Mit der Erfindung soll die Aufteilung der Gesamt-Wunschmenge auf die Einzelmengen der einzelnen Einspritzungen so koordiniert werden, dass möglichst lange alle Einspritzungen freigegeben werden können und dass eine möglichst gleichmäßige Aufteilung der Gesamt-Wunschmenge erfolgen kann. Hierzu müssen vor der Abschaltung einer Einspritzung alle auftretenden Einspritzungen ihre jeweilige Mindestmenge erreicht haben und unabhängig von jeweils vorgegebenen Wunschmengen für die einzelnen Einspritzungen werden die Kraftstoffmengen der einzelnen Einspritzungen gemäß einem vorgegebenen Reduzierungsverlauf reduziert.

Ein Reduzierungsverlauf für die Kraftstoffmengen der einzelnen Einspritzungen gemäß einer ersten Ausführungsform der Erfindung ist in der Figur 3 dargestellt. In dem Diagramm der Figur 3 sind die mit dem einzelnen Einspritzungen einzuspritzenden Kraftstoffmengen qPil1, qPil2 und qMI über der Gesamt-Wunschmenge qDes aufgetragen. Darüber hinaus ist als Orientierungshilfe die Gesamt-Wunschmenge qDes entsprechend der Summe der Einzelmengen qPill, qPil2 und qMI aufgetragen.

Der Figur 3 ist zu entnehmen, dass ausgehend von einer Gesamt-Wunschmenge qDes im Bereich zwischen

8 mm$^3$ und 6 mm$^3$ lediglich die Kraftstoffmenge qMI für die Haupteinspritzung reduziert wird. Die Einspritzmenge qPil1 und qPil2 für die beiden voreinspritzungen bleiben im Bereich der Gesamt-Wunschmenge qDes zwischen 8 mm$^3$ und 6 mm$^3$ konstant.

Ab einer Gesamt-Wunschmenge von qDes von 6 mm$^3$ werden die Einspritzmengen qMI, qPil1 und qPil2 im Wesentlichen alle gleichmäßig reduziert, um in der Summe die Gesamt-Wunschmenge qPil1 + qPil2 + qMI zu ergeben. Figur 3 ist zu entnehmen, dass alle drei Einspritzmengen qPil1, qPil2 und qMI gemäß einem linearen Reduzierungsverlauf mit jeweils unterschiedlicher Steigung reduziert werden.

Die Reduzierung der Kraftstoffmengen für die drei Einspritzungen schreitet soweit fort, bis die Teilmenge qPil2 für die zweite Voreinspritzung bei 1 mm$^3$ ihre Mindestmenge erreicht hat. Auch die Teilmengen qMI sowie qPil1 haben dann ihre, für diesen Betriebspunkt vorgegebene Mindestmenge von 2mm$^3$ beziehungsweise 1,5 mm$^3$ erreicht. Dies ist bei einer Gesamt-Wunschmenge qDes von 4,5 mm$^3$ der Fall. Infolgedessen wird bei Reduzierung unter qDes = 4,5 mm$^3$ die zweite Voreinspritzung qPil2 abgeschaltet. Damit die Mengenbilanzierung qPil1 + qPi12 + qMI = qDes erfüllt ist und die Gesamt-Wunschmenge von 4,5 mm$^3$ wieder erreicht wird, wird der Mengenanteil von 1 mm$^3$ der Teilmenge qPil2 hälftig auf die Haupteinspritzung und die erste Voreinspritzung aufgeteilt. Demgemäß ist ein steiler Anstieg des Mengenverlaufs bei der Teilmenge qMI für die Haupteinspritzung und der Teilmenge qPil1 für die erste Voreinspritzung zu beobachten. Es ist dabei festzustellen, dass gemäß der Erfindung darauf verzichtet wird, die durch die Abschaltung der zweiten Voreinspritzung freiwerdende Kraftstoffmenge lediglich einer der beiden verbleibenden Einspritzungen zuzuschlagen. Vielmehr wird darauf geachtet, dass das Mengenverhältnis zwischen den einzelnen Einspritzungen, wenn irgend möglich, erhalten bleibt.

Zwischen einer Gesamt-Wunschmenge qDes von 4,5 mm$^3$ und qDes von 2,5 mm$^3$ werden die Teilmenge qMI für die Haupteinspritzung und die Teilmenge qPil1 für die erste Voreinspritzung gemäß einem linearen Reduzierungsverlauf verringert. Es ist dabei festzustellen, dass die zwischen qDes - 4,5 mm$^3$ und qDes = 2,5 mm$^3$ gewählte Steigung für den linearen Reduzierungsverlauf sich von den zwischen qDes = 6mm$^3$ und qDes = 4,5 mm$^3$ gewählten Steigungen unterscheiden. Auch zwischen qDes = 4,5 mm$^3$ und qDes = 2,5 mm$^3$ sind im übrigen für die Reduzierung der Teilmenge qMI und die Reduzierung der Teilmenge qPil1 unterschiedliche Steigungen gewählt.

Bei einer Gesamt-Wunschmenge von qDes = 2,5 mm$^3$ hat dann die Teilmenge qPil1 für die erste Voreinspritzung ihre Mindestmenge von 1 mm$^3$ und die Teilmenge qMI für die Haupteinspritzung ihre Mindestmenge von 1,5 mm$^3$ für diesen Betriebspunkt erreicht, so dass die erste Voreinspritzung abgeschaltet wird. Die freiwerdende Kraftstoffmenge wird der einzig verbleibenden Teilmenge qMI für die Haupteinspritzung zugeschlagen, so dass die Mengenbilanz wieder die Gesamt-Wunschmenge qDes von 2,5 mm$^3$ erreicht. Bei weiterer Reduzierung der gesamten, einzuspritzenden Kraftstoffmenge wird daraufhin die Teilmenge qMI für die Haupteinspritzung gemäß einem linearen Reduzierungsverlauf weiter verringert, wobei die Teilmenge qMI zwischen qDes - 2,5 mm$^3$ und qDes - 1 mm$^3$ dem Verlauf der Gesamt-Wunschmenge qDes folgt. Hat die Gesamt-Wunschmenge qDes einen Wert von 1 mm$^3$ erreicht, wird auch die Haupteinspritzung abgeschaltet und die Teilmenge qMI nimmt einen Wert von 0 an.

Es ist festzustellen, dass die vorgegebenen Mindestmengen für die einzelnen Teilmengen qMI, qPil1 und qPi12 vom gerade eingestellten Betriebspunkt der Brennkraftmaschine sowie von der Anzahl der Einspritzungen abhängen.

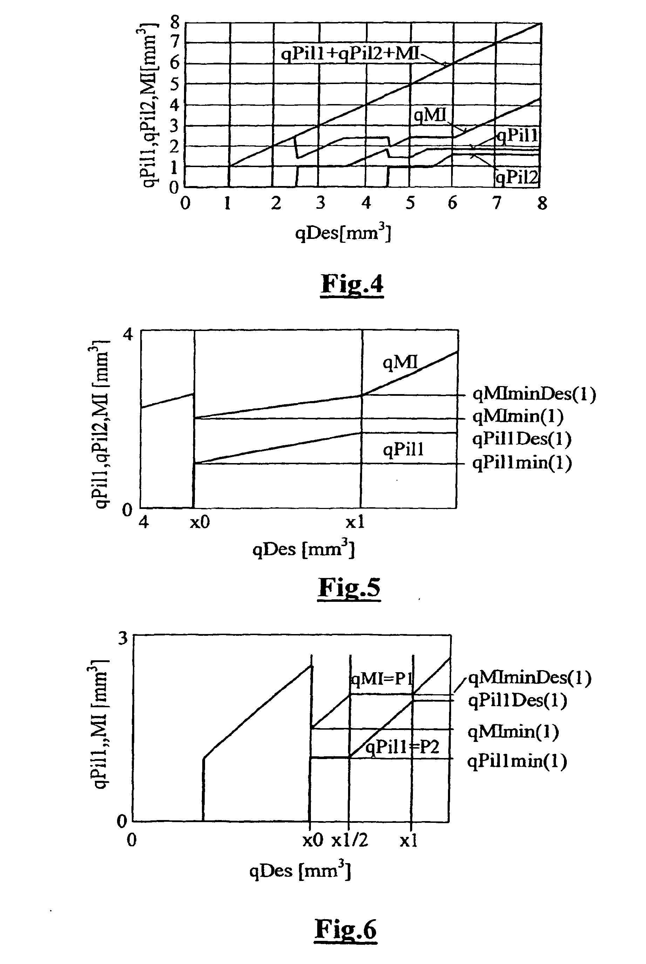

Die Darstellung der Figur 4 zeigt eine der Figur 3 vergleichbare Darstellung. Im Unterschied zu den Mengenverläufen der Figur 3 ist gemäß Figur 4 eine Priorisierung vorgenommen. So ist die Teilmenge qMI über die Teilmenge qPil1 für die erste Voreinspritzung und die Teilmenge qPil2 für die zweite Voreinspritzung priorisiert und die Teilmenge qPil1 der ersten Voreinspritzung ist über die Teilmenge qPil2 der zweiten Voreinspritzung priorisiert. Diese Priorisierung äußert sich dadurch, dass ab einer Gesamt-Wunschmenge qDes von 6 mm$^3$ zunächst die Teilmenge qPil2 für die zweite Voreinspritzung auf die zugehörige Mindestmenge von 1 mm$^3$ reduziert wird. Gemäß Figur 4 nimmt die Teilmenge qPil2 ihre Mindestmenge von 1 mm$^3$ ab einer Gesamt-Wunschmenge von etwa 5,5 mm$^3$ ein. Während der Reduzierung der Teilmenge qPil2 bleiben die Teilmenge qPil1 sowie die Teilmenge qMI auf einem konstanten Wert.

Sobald die Teilmenge qPil2 ihre Mindestmenge von 1 mm$^3$ erreicht hat wird auch die Teilmenge qPil1 reduziert und zwar bis zu ihrer Mindestmenge von 1,5 mm$^3$

Diese Mindestmenge von 1,5 mm$^3$ stellt dabei die Mindestmenge für qPil1 bei insgesamt drei Einspritzungen dar. Wenn nur noch die Haupteinspritzung und die erste Voreinspritzung getätigt werden sinkt die Mindestmenge für qPil1 dahingegen auf 1 mm$^3$ ab.

Sobald die Teilmenge qPil1 ihre Mindestmenge bei 1,5mm$^3$ erreicht hat, was bei einer Gesamt-Wunschmenge von 5 mm$^3$ der Fall ist, wird auch die Teilmenge qMI für die Haupteinspritzung reduziert. Die Reduktion der Teilmenge qMI für die Hauptmenge erfolgt dabei linear bis zu einem Wert von 2 mm$^3$, der bei einer Gesamt-Wunschmenge qDes von 4,5 mm$^3$ erreicht ist.

Bei qDes = 4,5 mm$^3$ weisen somit alle drei Einspritzungen mit den Teilmengen qMI, qPil1 und qPil2 ihre für diesen Betriebspunkt vorgegebene Mindestmenge auf. Die Priorisierung hat dabei bewirkt, dass zunächst die Teilmenge qPil2 für die zweite Voreinspritzung, dann die Teilmenge qPil1 für die erste Voreinspritzung und erst dann die Teilmenge qMI für die Haupteinspritzung reduziert wurden.

Sinkt die Gesamt-Wunschmenge qDes unter einen Betrag von 4,5 mm$^3$ wird in der Folge die zweite Voreinspritzung mit der Teilmenge qPil2 abgeschaltet. Die dadurch freiwerdende Kraftstoffmenge wird jeweils zur Hälfte auf die Teilmengen qPill und qMI verteilt, so dass die Wunschmenge qDes wieder erreicht wird.

Bei weiterer Reduzierung der Gesamt-Wunschmenge qDes wird nun zunächst die Teilmenge qPil1 gemäß einem linearen Reduzierungsverlauf reduziert, bis die neue Mindestmenge von 1 mm³ erreicht ist. Dies ist bei einer Gesamt-Wunschmenge qDes von etwa 3,5 mm³ der Fall.

Erst nachdem die Teilmenge qPil 1 für die erste Voreinspritzung ihre Mindestmenge erreicht hat, wird auch die Teilmenge qMI für die Haupteinspritzung gemäß einem linearen Reduzierungsverlauf reduziert, bis die aktuelle Mindestmenge von 1,5 mm³ für qMI erreicht ist. Dies ist bei einer Gesamt-Wunschmenge qDes von 2,5 mm³ der Fall.

Bei qDes - 2,5 mm³ wird dann auch die erste Voreinspritzung abgeschaltet und die Teilmenge qPill fällt auf den Wert 0. Um die Gesamt-Wunschmenge qDes auf den vorgegebenen Wert zu bringen wird die freiwerdende Kraftstoffmenge der einzig verbleibenden Einspritzung mit der Teilmenge qMI zugeschlagen.

Bei weiterer Reduzierung der Gesamt-Wunschmenge qDes wird die Teilmenge qMI für die Haupteinspritzung gemäß einem linearen Reduzierungsverlauf weiter reduziert, der dem Verlauf der Wunschmenge qDes folgt. Ist ein Wert von qMI - 1 mm³ erreicht, wird auch die Haupteinspritzung abgeschaltet und der Wert für die Teilmenge qMI fällt auf null.

Wie der Figur 4 zu entnehmen ist, hängt die an einem Betriebspunkt vorgegebene Mindestmenge für eine einzelne Einspritzung von der Anzahl der Einspritzungen ab. So liegt die Mindestmenge für die Teilmenge qMI bei drei Einspritzungen bei 2 mm³, bei nur noch zwei Einspritzungen bei 1,5 mm³ und bei nur noch einer Einspritzung, nämlich der Haupteinspritzung, bei 1 mm³. In ähnlicher Weise liegt die Mindestmenge für die Teilmenge qPill der ersten Voreinspritzung bei drei Einspritzungen auf dem Wert 1,5 mm³ und bei nur noch zwei Einspritzungen bei 1 mm³.

Bei der folgenden Erläuterung der erfindungsgemäßen Mengenbilanzierung anhand der Figuren 5 bis 12 werden unter anderem folgende Abkürzungen verwendet:

qPil1Des (1) :
Wunschmenge der Voreinspritzung 1 bei einer aktiven Voreinspritzung
qPil1Des (2) :
Wunschmenge der Voreinspritzung 1 bei zwei aktiven Voreinspritzungen
qPil2Des: Wunschmenge der Voreinspritzung 2
qDes: Gesamtwunschmenge
qMImin: Minimalmenge für die Haupteinspritzung
qMIminDes (1) :
Menge der Haupteinspritzung, ab der eine Reduktion beginnen soll für den Fall einer aktiven Voreinspritzung
qMIminDes (2) :
Menge der Haupteinspritzung, ab der eine Reduktion beginnen soll für den Fall zweier aktiver Voreinspritzungen
qPil1min (1) :
Minimalmenge für die Voreinspritzung 1 bei einer aktiven Voreinspritzung
qPil1min (2) :
Minimalmenge für die Voreinspritzung 1 bei zwei aktiven Voreinspritzungen
qPil2min: Minimalmenge für die Voreinspritzung 2

Die Darstellung der Figur 5 stellt einen vergrößerten Ausschnitt des Diagramms der Figur 3 dar, speziell in einem Bereich der Gesamt-Wunschmenge qDes zwischen 4 mm³ und etwa 7 mm³. Die Berechnung der reduzierten Teilmengen soll in einem Intervall von X0 bis X1 für die Gesamt-Wunschmenge qDes erläutert werden. Dies ist gemäß Figur 5 der für die Reduktion interessante Mengenbereich. An der Stelle X1 ist die Menge qMI$_{min}$Des (1) für die Haupteinspritzmenge qMI erreicht, ab der die einzelnen Teilmengen reduziert werden sollen. Für Gesamt-Wunschmengen qDes < X0 muss eine Einspritzung wegfallen, da ale Einspritzungen dann ihr Minimalniveau erreicht haben. Für die Teilmenge qPill gelten in den für die Reduktion interessanten Mengenbereich zwischen X1 und X0 folgende Randbedingungen, wobei die reduzierte Teilmenge qPil1 mit qPil1red (1) bezeichnet werden soll. Zwischen X0 < qDes < X1 gelten folgende Randbedingungen:

$$\texttt{qPil1red(1)(x0)=qPil1min(1)}$$

$$\texttt{qPil1red(1)(x1)=qPil1Des(1)}$$

wobei gilt:

$$x0=qPil1min(1)+qMImin(1)$$

$$x1=qPil1Des(1)+qMIminDes(1)$$

Für einen linearen Ansatz gilt weiter :

$$qPil1red(1)(qDes)=a0 * qDes+b0.$$

Ineinander eingesetzt ergibt sich für den Verlauf von qPil1red(1) folgende Gleichung:

$$qPil1red(1)(qDes)=[dPil1/(dMI+dPil1)] * qDes+qPil1min(1)$$
$$-[(dPil1 * x0)/(dMI+dPil1)]$$

wobei:

$$dPil1=qPil1Des(1)-qPil1min(1)$$

$$dMI=qMIminDes(1)-qMImin(1).$$

Anhand der Figur 6 soll die Bestimmung der Teilmengen qPil1 für die erste Voreinspritzung und der Teilmenge qMI für die Haupteinspritzung dann erläutert werden, wenn eine Priorisierung der Haupteinspritzung gegenüber der ersten Voreinspritzung vorliegt. Auch hier liegt der für die Reduktion interessante Mengenbereich zwischen x1 und x0. Die Teilmenge mit der Priorität Prio 1 wird als letzte reduziert. Es gelten folgende Randbedingungen:

P1 Menge der Einspritzung mit Prio 1 (normalerweise MI)
P2 Menge der Einspritzung mit Prio 2 (normalerweie VE1)

$$X0=P1min(1)+P2min(1)$$

$$X1/2=P1Des(1)+P2min(1)$$

$$X1=P1Des(1)+P2Des(1)$$

Für die Teilmenge mit Prio 2 gilt :

$$P2red(1)(x1)=P2Des(1)$$

$$P2red(1)(x1/2)=P2min(1).$$

Für einen linearen Ansatz gilt weiter:

$$P2red(1)(x1) = a * qDes + b$$

wobei a=1.

Aus diesen Bedingungen folgt für die Teilmenge mit Priorität Prio 2:

$$P2red(1)(qDes) = qDes - P1Des(1)$$

für qDes>x1/2

$$P2red(1)(qDes) = P2min(1)$$

für qDes<=x1/2

Für die Menge mit Prio 1 gilt:

$$P1red(1)(qDes) = P1Des(1)$$

für qDes>x1/2

$$P1red(1)(qDes) = qDes - P2min(1)$$

qDes<=x1/2

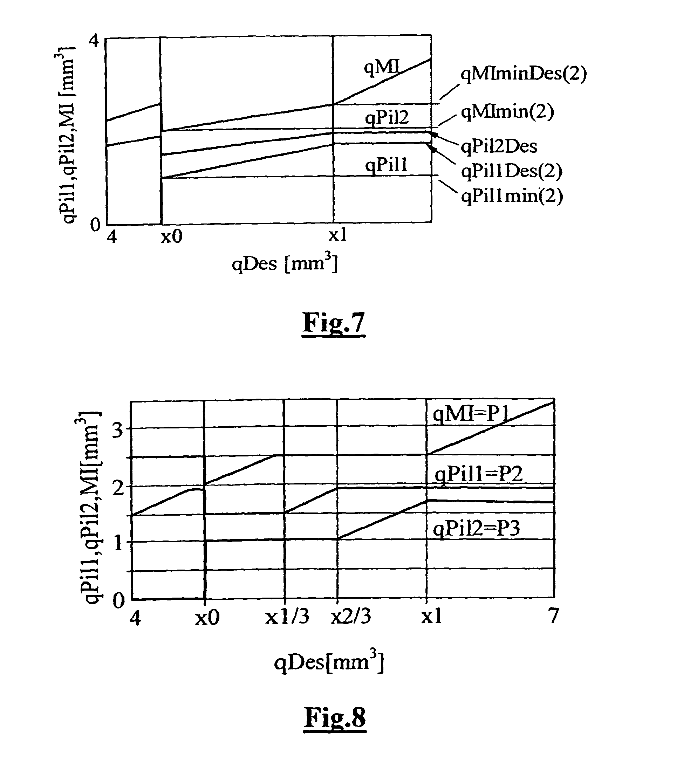

Anhand der Figur 7 soll nun der Berechnungsablauf für insgesamt drei Einspritzungen ohne Priorisierung erläutert werden. Figur 7 stellt dabei einen vergrößerten Ausschnitt aus dem Diagramm der Figur 3 dar.

Dabei wird angenommen, dass

$$qPil1Des(2) = const.$$

$$qPil2Des = const.$$

$$qPil1min(2) = const.$$

$$qPil2min = const.$$

Der für die Reduktion interessante Mengenbereich liegt zwischen x1 und x0. An der Stelle x1 ist für die Teilmenge qMI der Wert qMIminDes(2) erreicht, ab dem eine Reduzierung stattfinden soll. Für Mengen kleiner X0 muss eine Einspritzung wegfallen, da alle Einspritzungen dann ihre Mindestmengen erreicht haben.

Für die Funktion der Voreinspritzungen gelten somit folgende Randbedingungen:

$$qPil1red(2)(x0) = qPil1min(2)$$

$$qPil1red(2)(x1)=qPil1Des(2)$$

$$qPil2red(x0)=qPil2min$$

$$qPil2red(x1)=qPil2Des$$

Wobei :

$$x0=qPil1min(2)+qPil2min+qMImin(2)$$

$$x1=qPil1Des(2)+qPil2Des+qMIminDes(2)$$

Für einen linearen Ansatz gilt weiter :

$$qPil1red(1)(qDes)=a1 * qDes+b1$$

$$qPil2red(qDes)=a2 * qDes+b2$$

Obige Gleichungen ineinander eingesetzt ergeben folgende Gleichungen für den Verlauf der Voreinspritzmengen:

$$qPil1red(2)(qDes)=[dPil1/(dMI+dPil1+dPil2)] * qDes+qPil1min-$$
$$[(dPil1 * x0)/(dMI+dPil1+dPil2)]$$

$$qPil2red(qDes)=[dPil2/(dMI+dPil1+dPil2)] * qDes+qPil2min-$$
$$[(dPil1 * x0)/(dMI+dPil1+dPil2)]$$

wobei :

$$dPil1(2)=qPil1Des(2)-qPil1min(2)$$

$$dPil2(2)=qPil2Des(2)-qPil2min(2)$$

$$dMI(2)=qMIminDes(2)-qMImin(2).$$

Anhand der Figur 8 soll nunmehr der Berechnungsablauf für die Teilmengenbestimmung bei insgesamt 3 Einspritzungen mit einer Priorisierung erläutert werden:
Der für die Reduktion interessante Mengenbereich liegt zwischen x1 und x0. Die Menge mit Prio1 wird als letzte reduziert. Es gelten folgende Randbedingungen:

P1 Menge der Einspritzung mit Prio 1(normalerweise MI)
P2 Menge der Einspritzung mit Prio 2(normalerweise VE1)
P3 Menge der Einspritzung mit Prio 3(normalerweise VE2)

$$X0=P1min(2)+P2min(2)+P3min(2)$$

$$X1/3=P1Des(2)+P2min(2)+P3min(2)$$

$$X2/3=P1Des(2)+P2Des(2)+P3min(2)$$

$$X1=P1Des(2)+P2Des(2)+P3Des(2)$$

Für die Menge mit Prio 3 gilt für den linearen Ansatz:

$$P3red(2)(qDes)=qDes-(P1Des(2)+P2Des(2))$$

für qDes>x2/3

$$P3red(2)(qDes)=P3min(2)$$

für qDes<x2/3
Für die Menge mit Prio 2 gilt für den linearen Ansatz:

$$P2red(2)(qDes)=P2Des(2)$$

für qDes>x2/3

$$P2red(2)(qDes)=qDes-(P1Des(2)+P3min(2))$$

für x2/3>qDes>=x1/3

$$P2red(2)(qDes)=P2min(2)$$

für qDes<x1/3
Für die Menge mit Prio 1 gilt für den linearen Ansatz:

$$P1red(2)(qDes)=P1Des(2)$$

für qDes>x1/3

$$P1red(2)(qDes)=qDes-(P2min(2)+P3min(2))$$

für qDes<=x1/3

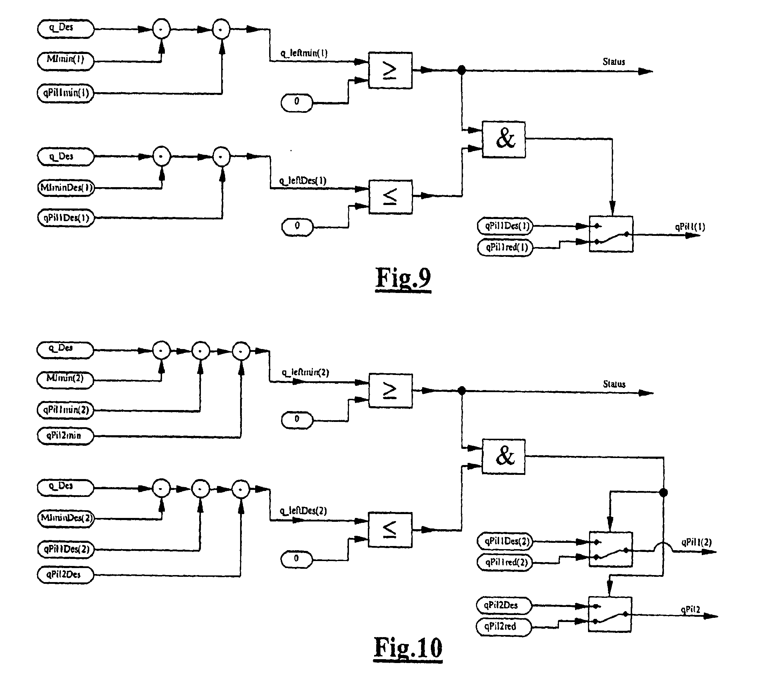

In der Figur 9 ist eine zur Realisierung des Berechnungsablaufs, wie er anhand der Figur 5 erläutert wurde, dargestellt. Mit der Berechnung von qleftmin (1) und der anschlie-βenden Prüfung auf qleftmin(1)>= 0 wird ermittelt, ob eine Voreinspritzung freigegeben werden kann. Diese Information wird dann über den Status ausgegeben. Mit der Berechnung von q_leftDes (1) und der anschließenden Überprüfung q_leftDes(1)<= 0 wird ermittelt, ob die Wunschmenge der ersten Voreinspritzung und die gewünschte Mindestmenge für die Haupteinspritzung realisiert werden können. Für den Fall dass eine Voreinspritzung freigegeben werden kann aber die Wunschmengen nicht realisierbar sind, entsprechen q_leftDes (1)<0, wird die erste Voreinspritzung in Abhängigkeit der vorgegebenen Mindestmengen reduziert. In diesem Fall wird für die erste Voreinspritzung die Größe qPil1red(1) durchgegeben. Ergibt sich bei der Prüfung dass q_leftDes(1)>0 ist, wird die Wunschmenge qPillDes(1) für die erste Voreinspritzung direkt durchgegeben.

In der Figur 10 ist eine Struktur zur Realisierung des anhand der Figur 7 erläuterten Berechnungsablaufs dargestellt. Dabei wird mit der Berechnung von q_leftmin(2) und der anschließenden Prüfung ob q_leftmin(2)>= 0 wird ermittelt, ob zwei Voreinspritzungen freigegeben werden können. Mit der Berechnung von q_leftDes(2) und der anschließenden Prüfung ob q_leftDes(2) <=0 ist wird ermittelt, ob die Wunschmengen für die beiden Voreinspritzungen realisiert werden können.

Für den Fall, dass zwei Voreinspritzungen freigegeben werden können, aber deren Wunschmengen nicht realisierbar sind, entsprechend q_leftDes(2)<=0, werden die Voreinspritzungen reduziert, wobei die vorgegebene Mindestmengen beachtet werden. Wesentlich ist dabei, dass nicht lediglich eine der Voreinspritzungen reduziert wird sondern beide Voreinspritzungen, so dass ein gleichmäßiger Brennverlauf sichergestellt werden kann. Bei einer Reduktion beider Voreinspritzmengen werden für die Voreinspritzmengen die Größen qPillred(2) und qPil2red übergeben. Ergibt sich bei der Prüfung dass q_left2>0 ist werden die Wunschmengen für die Voreinspritzungen direkt durchgegeben.

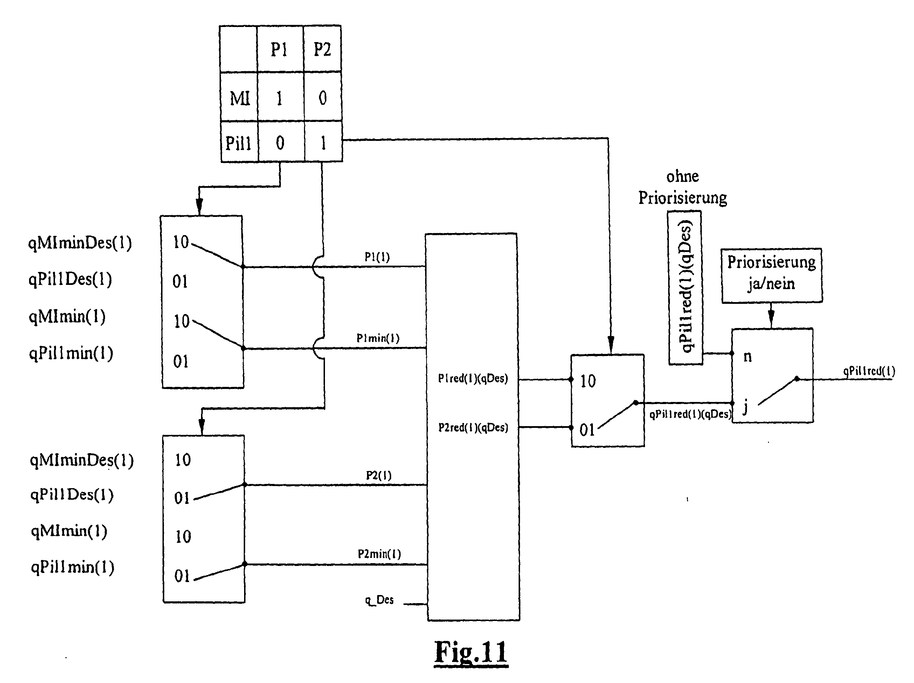

In der Darstellung der Figur 11 ist eine Struktur für die Realisierung des anhand der Figur 6 erläuterten Berechnungsablaufs dargestellt. Wird eine Priorisierung gewünscht, wird die Teilmenge für die erste Voreinspritzung qPillred(1) über die Priorisierungsstruktur berechnet. Die Priorisierungsliste sorgt dabei dafür, dass P1Des (1), P1min (1), P2Des (1) und P2min(1) die entsprechenden Größen zugeordnet werden.

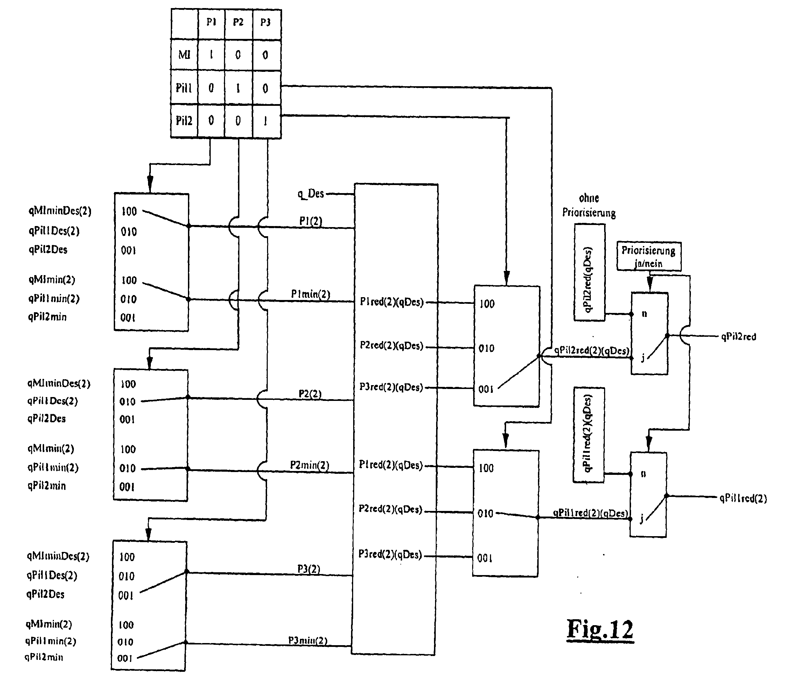

Die Darstellung der Figur 12 zeigt eine Struktur, die für die Umsetzung des anhand der in Figur 8 erläuterten Berechnungsablaufs geeignet ist. Wird eine Priorisierung gewünscht werden die Teilmengen qPillred(2) und qPiL2red der ersten und zweiten Voreinspritzung über die Priorisierungsstruktur berechnet. Die Priorisierungsliste sorgt dafür, dass für P1Des(2), P1min(2), P2Des(2), P2min(2), P3Des(2) und P3min(2) die entsprechenden Größen weitergegeben werden.

**Patentansprüche**

1. Verfahren zum Betreiben einer Brennkraftmaschine mit Einspritzanlage, insbesondere eines Dieselmotors mit Direkteinspritzung, wobei eine eingespritzte Kraftstoffmenge mittels mehrerer, während eines Zyklus der Brennkraftmaschine erfolgender Einspritzungen eingebracht wird, wobei eine mittels einer einzelnen Einspritzung eingebrachte Kraftstoffmenge bis zu einer vorgegebenen Mindestmenge veränderbar ist und wobei einzelne oder alle Einspritzungen abgeschaltet werden können,
**dadurch gekennzeichnet, dass** vor dem Abschalten einer Einspritzung alle Einspritzungen ungeachtet einer für die einzelnen Einspritzungen eventuell vorgegebenen Wunschmenge gemäß einem vorgegebenen Reduzierungsverlauf auf die jeweils vorgegebene Mindestmenge zurückgefahren werden.

2. Verfahren nach Anspruch 1,
**dadurch gekennzeichnet, dass** alle Einspritzungen gleichmäßig auf die jeweils vorgegebene Mindestmenge zurückgefahren werden.

3. Verfahren nach Anspruch 1 oder 2,
**dadurch gekennzeichnet, dass** eine oder mehrere Einspritzungen priorisiert sind, so dass die priorisierten Einspritzungen erst dann auf ihre jeweils vorgegebenen Mindestmengen zurückgefahren werden, nachdem die übrigen, nicht priorisierten Einspritzungen bereits die jeweilige Mindestmenge aufweisen.

4. Verfahren nach einem der vorstehenden Ansprüche,
**dadurch gekennzeichnet, dass** ein linearer Reduzierungsverlauf vorgegeben ist.

5. Verfahren nach einem der vorstehenden Ansprüche 1 bis 3,
**dadurch gekennzeichnet, dass** ein quadratischer oder kubischer Reduzierungsverlauf vorgegeben ist.

6. Steuereinheit für eine Brennkraftmaschine mit Einspritzanlage,

**dadurch gekennzeichnet, dass** Mittel vorgesehen sind, um die Brennkraftmaschine gemäß dem Verfahren nach einem der Ansprüche 1 bis 5 zu betreiben.

7. Brennkraftmaschine mit Einspritzanlage und einer Steuereinheit nach Anspruch 6, **dadurch gekennzeichnet, dass** die Steuereinheit Mittel aufweist, um die Brennkraftmaschine gemäß dem Verfahren nach einem der Ansprüche 1 bis 5 zu betreiben.

**Claims**

1. A process for operating an internal combustion engine with a fuel injection system, in particular a diesel engine with direct injection, whereby an injected volume of fuel is introduced by means of several injections taking place during one cycle of the internal combustion engine, it being possible to change a volume of fuel introduced by means of a single injection up to a predetermined minimum volume, and to switch off individual or all injections,
   **characterised in that**
   before switching off an injection, irrespective of any predetermined desired volume for the individual injections, all injections are returned to their respective predetermined minimum values in accordance with a predetermined reduction curve.

2. A process in accordance with claim 1,
   **characterised in that**
   all injections are returned to their respective preset minimum volumes in a uniform manner.

3. A process in accordance with claim 1 or 2,
   **characterised in that**
   one or more injections are prioritised such that the prioritised injections are not returned to their predetermined minimum volumes until the other, non-prioritised injections show their respective minimum volumes.

4. A process in accordance with one of the preceding claims,
   **characterised in that**
   a linear reduction curve is predetermined.

5. A process in accordance with one of the preceding claims 1 to 3,
   **characterised in that**
   a quadratic or cubic reduction curve is predetermined.

6. A control unit for an internal combustion engine with a fuel injection system,
   **characterised in that**
   means are provided for operating the internal combustion engine in accordance with the process disclosed in one of claims 1 to 5.

7. An internal combustion engine with a fuel injection system and a control unit in accordance with claim 6,
   **characterised in that**
   the control unit has means for operating the internal combustion engine in accordance with the process disclosed in one of claims 1 to 5.

**Revendications**

1. Procédé pour faire fonctionner un moteur à combustion interne comprenant une installation d'injection, notamment un moteur Diesel à injection directe, d'après lequel une quantité de carburant injectée est introduite par le biais de plusieurs injections s'effectuant pendant un cycle du moteur à combustion interne, une quantité de carburant introduite par le biais d'une injection individuelle pouvant être modifiée jusqu'à une quantité minimale prescrite, et les injections individuelles ou toutes les injections pouvant être arrêtées,
   **caractérisé en ce qu'**avant d'arrêter une injection, toutes les injections, en dépit d'une quantité souhaitée éventuellement prescrite pour les injections individuelles, sont ramenées selon une loi de réduction prescrite, à la quantité minimale respectivement prescrite.

**2.** Procédé selon la revendication 1,
**caractérisé en ce que** toutes les injections sont ramenées de manière homogène ou régulière à la quantité minimale respectivement prescrite.

**3.** Procédé selon la revendication 1 ou 2,
**caractérisé en ce qu'**une ou plusieurs injections sont rendues prioritaires ou priorisées de la façon suivante, à savoir que les injections priorisées ne sont ramenées à leur quantités minimales respectivement prescrites que lorsque les injections restantes, non priorisées, présentent déjà la quantité minimale respective.

**4.** Procédé selon l'une des revendications précédentes,
**caractérisé en ce que** l'on prescrit une loi de réduction linéaire.

**5.** Procédé selon l'une des revendications précédentes 1 à 3,
**caractérisé en ce que** l'on prescrit une loi de réduction quadratique ou cubique.

**6.** Unité de commande pour un moteur à combustion interne comprenant une installation d'injection,
**caractérisée en ce que** sont prévus des moyens pour faire fonctionner le moteur à combustion interne conformément au procédé selon l'une des revendications 1 à 5.

**7.** Moteur à combustion interne comprenant une installation d'injection et une unité de commande selon la revendication 6,
**caractérisé en ce que** l'unité de commande comprend des moyens pour faire fonctionner le moteur à combustion interne conformément au procédé selon l'une des revendications 1 à 5.

**Fig.1**

L[%]

**Fig.2**

qDes[mm³]

**Fig.3**

**Fig.4**

**Fig.5**

**Fig.6**

15

**Fig.7**

**Fig.8**

**Fig.9**

**Fig.10**

|      | P1 | P2 |
|------|----|----|
| MI   | 1  | 0  |
| Pill | 0  | 1  |

ohne
Priorisierung

qMIminDes(1)

qPillDes(1)

qMImin(1)

qPillmin(1)

10

01

10

01

P1(1)

P1min(1)

P1red(1)(qDes)

P2red(1)(qDes)

qPillred(1)(qDes)

Priorisierung
ja/nein

10

01

n

j

qPillred(1)

qPillred(1)(qDes)

qMIminDes(1)

qPillDes(1)

qMImin(1)

qPillmin(1)

10

01

10

01

P2(1)

P2min(1)

q_Des

## Fig.11

**Fig.12**